# EUROPEAN PATENT APPLICATION

(11) **EP 4 775 445 A1**
(43) Date of publication of application: **15.07.2026**
(21) Application number: 25223769.8
(22) Date of filing: 16.12.2025
(51) Int. Cl.: B60N 2/58, B60N 2/66, B60N 2/56, B60N 2/90

(54) **TRIM COVER AND COMFORT ASSEMBLY**

(30) Priority: 02.01.2025 US 202563741197 P; 01.12.2025 US 202519404593
(71) Applicant: Lear Corporation, Southfield, MI 48033 (US)
(72) Inventor: Baisch, Ashley, Washington Twp., MI, 58306 (US); Blair, Samuel, Rochester, MI, 48306 (US); Abdella, David J., Farmington Hills, MI, 48336 (US)
(74) Representative: Grünecker Patent- und Rechtsanwälte PartG mbB

(57) **Abstract**

An assembly includes a comfort assembly comprised of one or more comfort layers and a trim cover associated with the comfort assembly, wherein the trim cover includes at least one attachment flap comprised of a plastic material. The assembly further includes a plastic sheet of material extending over at least one layer of the one or more comfort layers, wherein the at least one attachment flap overlaps a portion of the plastic sheet of material. A weld attachment interface is formed between the at least one attachment flap and the portion of the plastic sheet of material.

## Description

### BACKGROUND

Seats may include a comfort assembly installed within a seat cushion or seat back. The comfort assembly may include one or more layers that provide massage, ventilation, and/or temperature effects, for example.

### BRIEF DESCRIPTION OF THE DRAWINGS

Figure 1 is a perspective view of an example seat with a comfort assembly.
Figure 2 is a schematic view of a comfort assembly and trim cover prior to welding.
Figure 3 is a schematic view of the comfort assembly and trim cover after welding.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

"One or more" includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

It should be understood that terms such as "about," "substantially," and "generally" are not intended to be boundaryless terms, and should be interpreted consistent with the way one skilled in the art would interpret those terms.

This disclosure relates to a trim cover and comfort assembly and a method of attaching the comfort assembly to the trim cover.

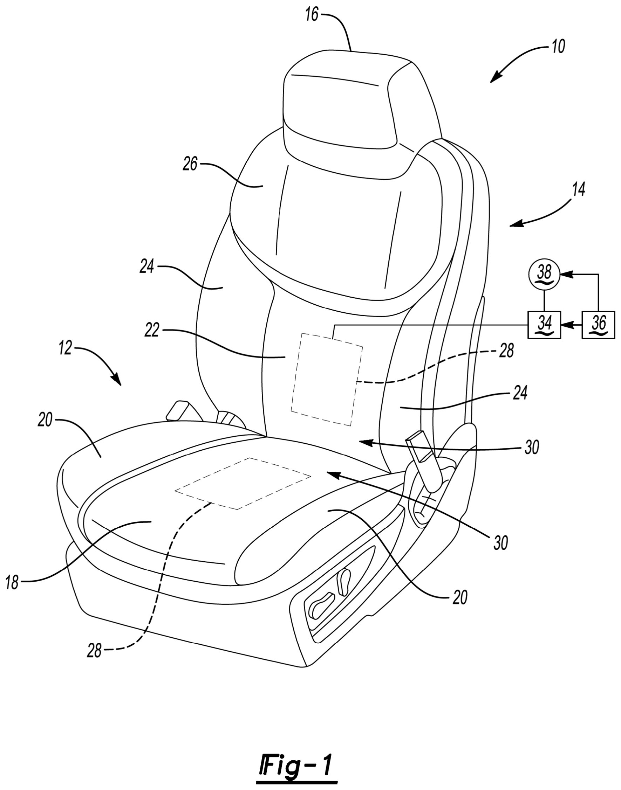

Figure 1 illustrates a seat assembly 10 according to one example embodiment. The seat assembly 10 may be utilized as a vehicle seat assembly 10 for seating in a vehicle, such as an automobile, an aircraft, a watercraft, or any other seating environment. The seat assembly 10 includes a seat bottom 12, which may be adapted to be mounted for motor-driven adjustable translation in a fore and aft direction and in an up and down direction of a vehicle. The seat assembly 10 includes a seat back 14, which may be pivotally connected to the seat bottom 12 to extend generally upright relative to the seat bottom 12 for pivotal adjustment relative to the seat bottom 12. A head restraint 16 may also be mounted to the seat back 14.

The seat bottom 12 includes a central seating surface 18 and a seating surface along a pair of side bolster regions 20 laterally spaced about the central seating surface 18. The seat back 14 includes a pelvic/lumbar seating surface 22 with a pair of laterally spaced apart side bolster regions 24 on either side. A thoracic/shoulder seating surface 26 is provided above the pelvic/lumbar seating surface 22 and the seating surface of seat back side bolster regions 24. It should be understood that this is just one example of a seat configuration, and that other configurations could also be utilized.

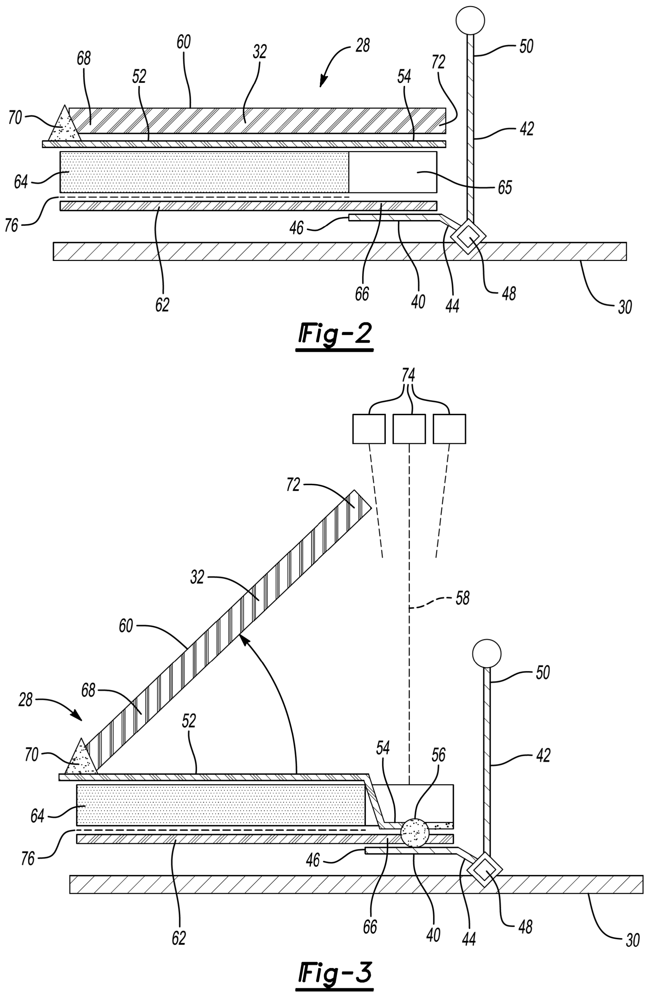

In some implementations, the seat assembly 10 may include one or more comfort assemblies 28 (Figure 2) installed within the seat bottom 12 and/or the seat back 14. The one or more comfort assemblies 28 may include one or more layers that provide a massage, a ventilation, and/or a temperature effect, for example.

In one example, a comfort assembly 28 is configured to provide a massage effect with pulsing movement that is transferred through the seat bottom 12 or seat back 14 to an associated portion of a seated occupant.

In some implementations, the comfort assembly 28 is comprised of one or more comfort layers that comprise a bladder layer, a heat mat, a topper pad, and/or a ventilation layer in any combination thereof.

In some implementations, a trim cover 30 is provided on the seat bottom 12 or seat back 14 to cover the comfort assembly 28. In one example, the trim cover 30 may comprise a decorative material covering the seat cushion 12 or seat back 14 to provide a desired aesthetic appearance for the seat assembly 10.

In some implementations, the comfort assembly 28 includes one or more fluid bladders 32 (Figure 2) that are selectively inflatable via an actuator assembly. In some implementations, the fluid bladders 32 may comprise discrete inflatable/deflatable pouches or cells, and the actuator assembly controls inflation and/or deflation of the bladders 32 via a valve assembly 34 and one or more controllers 36. In one example, the one or more controllers 36 regulate compressed air into and out of the bladders 32 in the seat assembly 10.

The actuator assembly may include a fluid supply source 38 that is connected to the valve assembly 34 to provide a source of fluid to the fluid bladders 32. In one example, the valve assembly 34 may comprise any type of valve assembly suitable for controlling flow from the fluid supply source 38 to the bladders 32, and the valve assembly 34 may comprise a single valve or multiple valves as needed. In implementations, the fluid supply source 38 may comprise a compressor, fan, air pump, blower, pump or pneumatic pump, for example.

In some implementations, the trim cover 30 may include at least one attachment flap 40 (Figure 2) that is comprised of a plastic material. In one example the plastic material comprises a thermoplastic polyurethane (TPU) material.

In an example, the flap 40 comprises a flat piece of material that is associated with a tie-down 42 of the trim cover 30. In an example, the flap 40 is attached to the trim cover 30 along a first portion 44 that is associated with the tie-down 42 such that an opposite edge 46 is movable relative to the first portion 44.

In some implementations, one or more tie-downs 42 are used to secure the trim cover 30 tightly to a seat frame or cushion, which ensures the trim cover 30 stays in place and maintains its intended shape. Examples of tie-downs may include elastic straps, hook/loop strips, hog rings, plastic J-clips or C-clips, drawstrings or cords, hook straps, push-in fasteners, snap fasteners, adhesive strips, etc.

In the example shown in Figures 2 and 3, the tie-down 42 comprises a first portion 48 that is fixed to the trim cover 30 at the first portion 44 of the flap 40, and a second portion 50 that is connectable to another seating component such as a cushion or frame, for example.

In some implementations, a plastic sheet of material 52 extends over at least one layer of the one or more comfort layers of the comfort assembly 28. In an example, the plastic sheet of material 52 comprises a thin flat layer of thermoplastic polyurethane (TPU) material.

In some implementations, the attachment flap 40 and a portion 54 of the plastic sheet of material 52 are in an overlapping relationship.

In some implementations, a weld attachment interface 56 is formed between the attachment flap 40 and the portion 54 of the plastic sheet of material 52. In one example, the weld attachment interface 56 (Figure 3) comprises a permanent and fixed connection formed by a welding operation that melts overlapping portions of the attachment flap 40 and plastic sheet of material 52 together. In some implementations, the welding operation comprises a laser welding operation where a highly focused laser beam 58 is used as the heat source to fuse the overlapping plastic materials together.

In some implementations, the plastic material for the flap 40 and for the sheet of material 52 both comprise a thermoplastic polyurethane material.

In some implementations, the thermoplastic polyurethane material of the plastic sheet of material 52 comprises a first level of clarity, e.g., a transparent material such as a clear thermoplastic polyurethane material for example, and the thermoplastic polyurethane material of the attachment flap 40 comprises a second level of clarity that is different than the first level of clarity.

The term "clarity" of the material refers to a level of absorptiveness to laser energy supplied during the welding process, and may be quantified by an absorption coefficient. An absorption coefficient (α) describes how well a material absorbs light at a specific wavelength. For example, materials with a higher absorption coefficient absorb more energy over a shorter distance than materials with a lower absorption coefficient.

In one example, the attachment flap 40 comprises an opaque material, e.g., a black thermoplastic polyurethane material, which is darker than the material of the plastic sheet of material 52.

In one example, the thermoplastic polyurethane material of the plastic sheet of material comprises a first level of absorptiveness to laser energy, and wherein the thermoplastic polyurethane material of the at least one attachment flap comprises a second level of absorptiveness to laser energy that is different than the first level of absorptiveness to laser energy. In one example, the second level of absorptiveness is higher than the first level of absorptiveness.

In some implementations, the one or more comfort layers of the comfort assembly 28 comprise one or more of a bladder layer 60, a heat mat 62, and a topper pad 64. In one example, the bladder layer 60 comprises one or more inflatable discrete pouches/bladders 32 for massage/lumbar purposes. In one example, the heat mat 62 comprises a flexible layer of material including one or more heating elements. In one example, the topper pad 64 comprises a flexible layer of material for cushioning purposes. The topper pad 64 may have a notch 65 to form an open space between the plastic sheet of material 52 and the heat mat 62 and/or flap 40 for welding purposes.

In some implementations, the bladder layer 60 comprises a topmost layer and the heat mat 62 is a bottommost layer of the comfort assembly 28.

In some implementations, the topper pad 64 is between the heat mat 62 and the bladder layer 60.

In some implementations, the plastic sheet of material 52 is positioned between the bladder layer 60 and the topper pad 64.

In some implementations, at least one edge portion 54 of the plastic sheet of material 52 overlaps the attachment flap 40 in a stacked relationship.

In some implementations, at least one edge 66 of the heat mat 62 is between the plastic sheet of material 52 and the attachment flap 40.

In some implementations, the bladder layer 60 has a first edge portion 68 welded to the plastic sheet of material 52 at an attachment interface 70. In one example, the welded attachment interface 70 comprises a permanent attachment interface formed by melting using lasers, for example. The bladder layer 60 further includes an opposite, second edge portion 72 that overlaps the attachment flap 40. In some implementations, the second edge portion 72 of the bladder layer 60 is rotatable (e.g., pivotable between a stacked position and unstacked position) about a connection point, e.g., attachment interface 70, which is between the first edge portion 68 and the plastic sheet of material 52. This movement uncovers the edge portion 54 of the plastic sheet of material 52 that overlaps the attachment flap 40 for a welding operation. Thus, the material is exposed for a line of sight operation such as laser welding, for example.

The subject disclosure also provides for a method of welding a comfort assembly 28 to a trim cover 30 via overlapping plastic layers. In some implementations, the method includes positioning the comfort assembly 28 relative to a trim cover 30 having at least one attachment flap 40 comprised of a plastic material, and extending a plastic sheet of material 52 over at least one comfort layer of the comfort assembly 28 such that a portion 54 of the plastic sheet of material 52 overlaps the attachment flap 40. The method then further includes welding the portion 54 of the plastic sheet of material 52 to the attachment flap 40.

In some implementations, the method may include positioning the comfort assembly 28 relative to the trim cover 30 such that at least one comfort layer of the comfort assembly 28 overlaps the attachment flap 40 and the portion 54 of the plastic sheet of material 52.

In some implementations, the method may include welding the portion 54 of the plastic sheet of material 52 and the portion 66 of the heat mat 62 to the attachment flap 40.

In some implementations, the attachment flap 40 that is comprised of the darker plastic material, e.g., a black plastic material, is always underneath the portion 54 of the plastic sheet of material 52 that is lighter, e.g., clearer, than the darker plastic material. This helps to protect the trim cover 30 from any possible burn through associated with laser welding.

In some implementations, the method may include: positioning the bladder layer 60 as a topmost layer and positioning the heat mat 62 as a bottommost layer; positioning the topper pad 64 between the heat mat 62 and the bladder layer 60; and/or positioning the plastic sheet of material 52 between the bladder layer 60 and the heat mat 62.

In some implementations, the method may include: extending at least one edge of the plastic sheet of material 52 to overlap the attachment flap 40; and/or positioning at least one edge of the heat mat 62 between the plastic sheet of material 52 and the attachment flap 40.

In some implementations, the method may include welding a first edge portion 68 of the bladder layer 60 to the plastic sheet of material 52 and overlapping an opposite, second edge portion 72 of the bladder layer 60 with the attachment flap 40. The the second edge portion 72 is then rotated about a connection point 70 between the first edge portion 68 and the plastic sheet of material 52 to uncover an edge portion 54 of the plastic sheet of material 52 that overlaps the attachment flap 40. The edge portion 54 of the plastic sheet of material 52 is then welded to the attachment flap 40 by laser beam welding, for example.

As such, the welding procedure is configured such that the bladder layer 60 is rotated/pulled upwards for one or more laser heads 74 to have access for a focused laser beam 58 to weld the plastic sheet of material 52 and heater mat 62 to the flap 40 on the trim cover 30 as shown in Figure 3.

In some implementations, multiple laser weld heads 74 can be operated simultaneously to create a multilayer bladder comfort assembly in approximately 0.5 seconds, for example.

In one example, there is a lamination bond 76 between the heat mat 62 and the topper pad 64. In some implementations, the combined comfort seat layers include clear TPU sheets and the trim attachment flap comprises a black TPU sheet, such that the laser beam penetrates the clear sheets and stops at the black sheet for welding. Thus, the comfort assembly is attached as a unit to the trim cover to form a final assembly.

Further, the described welding process may be fully automated making it much faster than prior assembly processes and it requires minimal non-automated intervention.

In some implementations, an assembly may include: a comfort assembly comprised of one or more comfort layers; a trim cover associated with the comfort assembly, wherein the trim cover includes at least one attachment flap comprised of a plastic material; a plastic sheet of material extending over at least one layer of the one or more comfort layers, wherein the at least one attachment flap overlaps a portion of the plastic sheet of material; and a weld attachment interface formed between the at least one attachment flap and the portion of the plastic sheet of material.

In some implementations, the assembly may include any of the following features either alone or in any combination thereof.

In some implementations, the plastic material comprises a thermoplastic polyurethane material.

In some implementations, the plastic sheet of material comprises a thermoplastic polyurethane material.

In some implementations, the thermoplastic polyurethane material of the plastic sheet of material comprises a first level of absorptiveness to laser energy, and wherein the thermoplastic polyurethane material of the at least one attachment flap comprises a second level of absorptiveness to laser energy that is different than the first level of absorptiveness to laser energy.

In some implementations, the one or more comfort layers comprise one or more of a bladder layer, a heat mat, and a topper pad, and wherein the at least one attachment flap is associated with at least one tie-down of the trim cover.

In some implementations, the bladder layer comprises a topmost layer and the heat mat is a bottommost layer, and wherein the topper pad is between the heat mat and the bladder layer.

In some implementations, the plastic sheet of material is positioned between the bladder layer and the topper pad, and wherein at least one edge of the plastic sheet of material overlaps the at least one attachment flap.

In some implementations, wherein at least one edge of the heat mat is between the plastic sheet of material and the at least one attachment flap.

In some implementations, the bladder layer has a first edge welded to the plastic sheet of material and an opposite, second edge overlaps the at least one attachment flap, and wherein the second edge of the bladder layer is rotatable about a connection point between the first edge and the plastic sheet of material to uncover an edge of the plastic sheet of material that overlaps the at least one attachment flap for a welding operation.

In some implementations, a method includes: positioning a comfort assembly comprised of one or more comfort layers relative to a trim cover that has at least one attachment flap comprised of a plastic material; extending a plastic sheet of material over at least one comfort layer of the one or more comfort layers such that a portion of the plastic sheet of material overlaps the at least one attachment flap; and welding the portion of the plastic sheet of material to the at least one attachment flap.

In some implementations, the method may include any of the following steps either alone or in any combination thereof.

In some implementations, the method may include positioning the comfort assembly relative to the trim cover such that at least one layer of the one or more comfort layers overlaps the at least one attachment flap and the portion of the plastic sheet of material.

In some implementations, the plastic material comprises a thermoplastic polyurethane material, and wherein the plastic sheet of material comprises a thermoplastic polyurethane material.

In some implementations, the thermoplastic polyurethane material of the plastic sheet of material comprises a first level of absorptiveness to laser energy, and wherein the thermoplastic polyurethane material of the at least one attachment flap comprises a second level of absorptiveness to laser energy that is different than the first level of absorptiveness to laser energy.

In some implementations, the one or more comfort layers comprise one or more of a bladder layer, a heat mat, and a topper pad, and wherein the at least one attachment flap is associated with at least one tie-down of the trim cover.

In some implementations, the method may include positioning the bladder layer as a topmost layer and positioning the heat mat as a bottommost layer.

In some implementations, the method may include positioning the topper pad between the heat mat and the bladder layer.

In some implementations, the method may include positioning the plastic sheet of material between the bladder layer and the heat mat.

In some implementations, the method may include extending at least one edge of the plastic sheet of material to overlap the at least one attachment flap.

In some implementations, the method may include positioning at least one edge of the heat mat between the plastic sheet of material and the at least one attachment flap.

In some implementations, the method may include: welding a first edge of the bladder layer to the plastic sheet of material and overlapping an opposite, second edge of the bladder layer with the at least one attachment flap; rotating the second edge of the bladder layer about a connection point between the first edge and the plastic sheet of material to uncover an edge of the plastic sheet of material that overlaps the at least one attachment flap; and welding the edge of the plastic sheet of material to the at least one attachment flap.

Although the different examples have the specific components shown in the illustrations, embodiments of this disclosure are not limited to those particular combinations. It is possible to use some of the components or features from one of the examples in combination with features or components from another one of the examples. In addition, the various figures accompanying this disclosure are not necessarily to scale, and some features may be exaggerated or minimized to show certain details of a particular component or arrangement.

One of ordinary skill in this art would understand that the above-described embodiments are exemplary and non-limiting. That is, modifications of this disclosure would come within the scope of the claims. Accordingly, the following claims should be studied to determine their true scope and content.

## Claims

1. An assembly comprising:
a comfort assembly comprised of one or more comfort layers;
a trim cover associated with the comfort assembly, wherein the trim cover includes at least one attachment flap comprised of a plastic material;
a plastic sheet of material extending over at least one layer of the one or more comfort layers, wherein the at least one attachment flap overlaps a portion of the plastic sheet of material; and
a weld attachment interface formed between the at least one attachment flap and the portion of the plastic sheet of material.

2. The assembly of claim 1, wherein the plastic material comprises a thermoplastic polyurethane material.

3. The assembly of any of claims 1 or 2, wherein the plastic sheet of material comprises a thermoplastic polyurethane material.

4. The assembly of claim 3, wherein the thermoplastic polyurethane material of the plastic sheet of material comprises a first level of absorptiveness to laser energy, and wherein the thermoplastic polyurethane material of the at least one attachment flap comprises a second level of absorptiveness to laser energy that is different than the first level of absorptiveness to laser energy.

5. The assembly of any of the preceding claims, wherein the one or more comfort layers comprise one or more of a bladder layer, a heat mat, and a topper pad, and wherein the at least one attachment flap is associated with at least one tie-down of the trim cover,
wherein preferably the bladder layer comprises a topmost layer and the heat mat is a bottommost layer, and wherein the topper pad is between the heat mat and the bladder layer.

6. The assembly of claim 5, wherein the plastic sheet of material is positioned between the bladder layer and the topper pad, and wherein at least one edge of the plastic sheet of material overlaps the at least one attachment flap.

7. The assembly of claim 5, wherein at least one edge of the heat mat is between the plastic sheet of material and the at least one attachment flap,
and/or wherein the bladder layer has a first edge welded to the plastic sheet of material and an opposite, second edge overlaps the at least one attachment flap, and wherein the second edge of the bladder layer is rotatable about a connection point between the first edge and the plastic sheet of material to uncover an edge of the plastic sheet of material that overlaps the at least one attachment flap for a welding operation.

8. A method comprising:
positioning a comfort assembly comprised of one or more comfort layers relative to a trim cover that has at least one attachment flap comprised of a plastic material;
extending a plastic sheet of material over at least one comfort layer of the one or more comfort layers such that a portion of the plastic sheet of material overlaps the at least one attachment flap; and
welding the portion of the plastic sheet of material to the at least one attachment flap.

9. The method of claim 8, including positioning the comfort assembly relative to the trim cover such that at least one layer of the one or more comfort layers overlaps the at least one attachment flap and the portion of the plastic sheet of material.

10. The method of claim 8 or 9, wherein the plastic material comprises a thermoplastic polyurethane material, and wherein the plastic sheet of material comprises a thermoplastic polyurethane material,
wherein preferably the thermoplastic polyurethane material of the plastic sheet of material comprises a first level of absorptiveness to laser energy, and the thermoplastic polyurethane material of the at least one attachment flap comprises a second level of absorptiveness to laser energy that is different than the first level of absorptiveness to laser energy.

11. The method of any of claims 8 to 10, wherein the one or more comfort layers comprise one or more of a bladder layer, a heat mat, and a topper pad, and wherein the at least one attachment flap is associated with at least one tie-down of the trim cover.

12. The method of claim 11, including positioning the bladder layer as a topmost layer and positioning the heat mat as a bottommost layer,
preferably including positioning the topper pad between the heat mat and the bladder layer.

13. The method of claim 12, including positioning the plastic sheet of material between the bladder layer and the heat mat.

14. The method of claim 13, including extending at least one edge of the plastic sheet of material to overlap the at least one attachment flap,
and/or including positioning at least one edge of the heat mat between the plastic sheet of material and the at least one attachment flap.

15. The method of any of claims 13 or 14, including:
welding a first edge of the bladder layer to the plastic sheet of material and overlapping an opposite, second edge of the bladder layer with the at least one attachment flap;
rotating the second edge of the bladder layer about a connection point between the first edge and the plastic sheet of material to uncover an edge of the plastic sheet of material that overlaps the at least one attachment flap; and
welding the edge of the plastic sheet of material to the at least one attachment flap.
